Europäisches Patentamt

European Patent Office

Office européen des brevets

(19)

(11) Numéro de publication : **0 364 330 B1**

(12)
# FASCICULE DE BREVET EUROPÉEN

(45) Date de publication du fascicule du brevet :
18.12.91 Bulletin 91/51

(51) Int. Cl.⁵ : **F28F 11/02, F16L 55/12**

(21) Numéro de dépôt : **89402709.3**

(22) Date de dépôt : **02.10.89**

(54) Bouchon d'obturation d'un tube de générateur de vapeur.

(30) Priorité : **12.10.88 FR 8813434**

(43) Date de publication de la demande :
**18.04.90 Bulletin 90/16**

(45) Mention de la délivrance du brevet :
**18.12.91 Bulletin 91/51**

(84) Etats contractants désignés :
**BE CH DE ES GB LI SE**

(56) Documents cités :
**EP-A- 0 035 911**
**FR-A- 2 597 771**
**FR-A- 2 599 463**
**US-A- 1 794 369**
**US-A- 4 765 374**

(73) Titulaire : **FRAMATOME**
**Tour Fiat 1, Place de la Coupole**
**F-92400 Courbevoie (FR)**

(72) Inventeur : **Mounet, Jean-Charles**
**9 allée de Touraine Jonage**
**F-69330 Meyzieu (FR)**

(74) Mandataire : **Bouget, Lucien et al**
**Cabinet Lavoix 2, Place d'Estienne d'Orves**
**F-75441 Paris Cédex 09 (FR)**

## Description

L'invention concerne un bouchon d'obturation d'un tube de générateur de vapeur selon le préambule de la revendication 1.

Un tel bouchon est connu selon US-A-4765374.

Les générateurs de vapeur des réacteurs nucléaires à eau sous pression comportent une enveloppe de forme générale cylindrique à l'intérieur de laquelle une boîte à eau est délimitée par une plaque tubulaire de forte épaisseur sur laquelle est fixé le faisceau de tubes du générateur de vapeur. Chacun des tubes du faisceau comporte deux branches rectilignes parallèles dont les parties d'extrémité sont fixées à l'intérieur de la plaque tubulaire, généralement par dudgeonnage et par soudage.

Dans le générateur de vapeur en service, les tubes sont en contact à la fois avec le fluide primaire du réacteur nucléaire constitué par de l'eau sous pression et avec le fluide secondaire constitué par de l'eau d'alimentation qui se vaporise. Dans les conditions d'exploitation du générateur de vapeur, les tubes sont susceptibles de subir diverses dégradations et en particulier une corrosion par les fluides avec lesquels ils sont en contact. Certains tubes du générateur de vapeur peuvent devenir défectueux en service et présenter par exemple des fissures génératrices de fuites entraînent une contamination du fluide secondaire.

Il est donc nécessaire, pendant les périodes d'entretien du réacteur, d'intervenir sur le générateur de vapeur et d'effectuer le bouchage des tubes présentant des dégradations susceptibles d'entraîner des fuites.

On connaît des bouchons d'obturation des tubes d'un générateur de vapeur qui comportent un corps de forme tubulaire fermé à l'une de ses extrémités par un fond et des moyens de serrage également tubulaires introduits dans l'alésage du corps du bouchon pour assurer l'expansion diamétrale du bouchon après son introduction dans le tube du générateur de vapeur.

Les moyens de serrage peuvent comporter en particulier une douille en un métal tel que le nickel et un noyau en un alliage de nickel à mémoire de forme, ces deux pièces étant destinées à coopérer pour assurer l'expansion radiale du corps du bouchon et sa fixation dans le tube.

La douille et le noyau expanseur comportent des surfaces d'actionnement correspondantes qui coopèrent, lorsqu'on engage le noyau expanseur dans la douille pour assurer l'expansion diamétrale de la douille et du corps du bouchon. Le noyau expanseur est introduit dans l'alésage de la douille, lorsque le bouchon est en place dans le tube du générateur de vapeur et les surfaces d'actionnement de le douille et du noyau sont généralement constituées par des portées tronconiques évasées en direction de l'ouverture du corps du bouchon située à l'opposé de son fond.

Lorsque le bouchon est porté, à l'intérieur du générateur de vapeur, à la température de service de ce générateur, le noyau expanseur à mémoire de forme subit une expansion diamétrale assurant une expansion complémentaire du corps du bouchon et la fermeture étanche du tube du générateur de vapeur.

De tels bouchons qui réalisent une obturation efficace des tubes du générateur de vapeur présentent cependant certains inconvénients.

D'une part, les alliages de nickel à mémoire de forme utilisés pour constituer le noyau expanseur ont une résistance insuffisante à la corrosion par le fluide primaire du réacteur, à la température de service.

D'autre part, le serrage étanche du bouchon par poussée du noyau expanseur, à l'intérieur de la douille, nécessite d'exercer des efforts importants pour vaincre les forces de frottement et déformer le métal de la douille et du corps du bouchon.

De plus, il peut s'avérer nécessaire d'effectuer le démontage de bouchons qui ont été mis en place dans des tubes de générateur de vapeur. Il en est ainsi en particulier dans le cas où l'on a effectué un bouchage préventif de certains tubes du faisceau qui sont ensuite remis en service après un traitement, par exemple de détensionnement, leur permettant de résister à la corrosion.

De même, il peut s'avérer avantageux de remettre en service des tubes du faisceau du générateur de vapeur présentant des fissures, dans la mesure où l'on dispose depuis une période récente, de procédés de réparation efficaces de ces tubes.

Les bouchons d'obturation tels que décrits ci-dessus peuvent être démontés en réalisant préalablement l'extraction du noyau puis en étirant le corps du bouchon de manière à produire une striction permettant son démontage.

Un tel procédé de démontage peut être mis en oeuvre en utilisant le dispositif décrit dans le FR-A-2621998.

Ce procédé en deux étapes est d'une mise en oeuvre relativement longue et compliquée et nécessite l'utilisation d'un outillage complexe. De plus, il existe certains risques de rupture de la partie d'extrémité du corps du bouchon sur laquelle on exerce une poussée, avant qu'on ait réalisé la séparation de la partie d'accrochage et de serrage du corps du bouchon de la paroi interne du tube du générateur de vapeur.

Le but de l'invention est donc de proposer un bouchon d'obturation d'un tube de générateur de vapeur comportant un corps tubulaire fermé à l'une de ses extrémités par un fond et des moyens d'expansion diamétrale du bouchon constitués par une douille placée à l'intérieur du corps du bouchon dans une zone d'expansion et un noyau expanseur comportant une surface d'actionnement destinée à coopérer avec une surface correspondante de la douille pour réaliser son expansion diamétrale et l'expansion du bouchon, ce bouchon résistant parfaitement à la corrosion par le fluide primaire du générateur de vapeur pouvant être mis en place rapidement et sans difficultés dans un tube de manière à en assurer une obturation efficace et étanche et pouvant être extrait ultérieurement, en une seule opération et sans risque de rupture d'une partie du bouchon entraînant la présence d'une pièce détachée à l'intérieur du tube.

Dans ce but, la douille comporte au moins deux secteurs cylindriques élastiques séparés par au moins deux fentes longitudinales et une surface d'actionnement sur sa surface interne évasée en direction du fond du bouchon, le noyau expanseur engagé à l'intérieur de la douille fendue, ayant une surface d'actionnement correspondante sur sa surface externe disposée du côté du fond du bouchon, par rapport à la surface d'actionnement de la douille, lorsque le bouchon est dans son état non expansé permettant son introduction dans le tube, l'expansion du bouchon pouvant être réalisée par déplacement du noyau expanseur en direction de l'extrémité ouverte du corps du bouchon opposée à son fond, à l'intérieur de la douille.

Afin de bien faire comprendre l'invention, on va maintenant décrire, à titre d'exemple non limitatif, en se référant aux figures jointes en annexe, un mode de réalisation d'un bouchon d'obturation suivant l'invention et un procédé de montage et de démontage de ce bouchon dans un tube de générateur de vapeur d'un réacteur nucléaire à eau sous pression.

La figure 1 est une vue en coupe axiale d'un bouchon suivant l'invention.

La figure 2 est une vue en perspective de la douille fendue du bouchon représenté sur la figure 1.

La figure 3 est une vue en perspective du noyau expanseur du bouchon représenté sur la figure 1.

La figure 4 est une vue en coupe axiale d'un bouchon suivant l'invention en position d'obturation dans un tube de générateur de vapeur.

La figure 5 est une vue en coupe axiale d'un bouchon d'obturation suivant l'invention pendant son démontage.

La figure 6 est une vue en coupe axiale d'un bouchon d'obturation suivant l'invention, pendant son démontage, suivant une variante de réalisation.

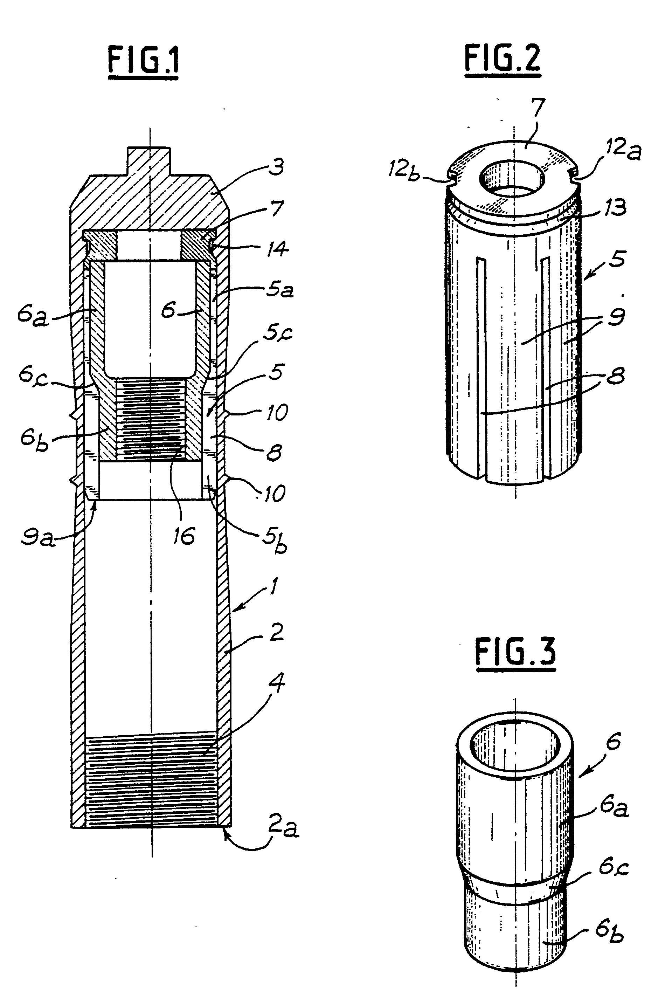

Sur la figure 1, on voit un bouchon suivant l'invention désigné de manière générale par le repère 1. Ce bouchon 1 comporte un corps tubulaire 2 fermé à l'une de ses extrémités par un fond plein 3 et comportant une extrémité opposée ouverte. L'alésage interne du corps tubulaire 2 est taraudé sur une partie 4 de sa longueur, au voisinage de l'extrémité ouverte du corps 2.

Des moyens d'expansion diamétrale constitués par une douille 5 et un noyau expanseur 6 sont disposés à l'intérieur du corps 2. La douille 5 est en appui sur le fond 3 par l'intermédiaire d'un fond annulaire 7 et comporte, à partir du fond annulaire 7, une première partie 5a à faible épaisseur de paroi et une seconde partie 5b à forte épaisseur de paroi séparées par une surface tronconique 5c évasée en direction du fond 3 du bouchon.

L'alésage intérieur de la douille 5 comporte donc une partie à grand diamètre et une partie à petit diamètre séparées par une surface tronconique.

Sur la figure 1, le bouchon est représenté dans un état non expansé, le diamètre extérieur du corps 2 étant légèrement inférieur au diamètre intérieur d'un tube du générateur de vapeur.

Dans sa partie située en vis-à-vis de la partie 5b de la douille à faible diamètre intérieur, le corps du bouchon comporte sur sa surface externe, deux cannelures circulaires mâles 10 destinées à assurer l'ancrage du bouchon dans un tube de générateur de vapeur, comme il sera expliqué plus loin.

Comme il est visible sur les figures 1 et 2, la douille 5 comporte des fentes longitudinales 8 délimitant des secteurs cylindriques 9 ou lamelles qui peuvent être déformés élastiquement de manière à s'éloigner les uns des autres et à assurer l'expansion diamétrale de la douille 5.

La douille 5 est usinée intérieurement de manière que chacune des lamelles présente une partie de faible épaisseur correspondant à la partie 5a de la douille, une partie à forte épaisseur correspondant à la partie 5b de la douille et une partie inclinée évasée vers le fond 7 correspondant à la partie 5c de la douille 5.

Le fond annulaire 7 de la douille 5 comporte une gorge périphérique 13 et deux lumières radiales 12a et 12b débouchant dans la gorge 13 et constituant avec deux ergots 14 usinés dans la paroi intérieure du corps 2 du bouchon, une liaison à baïonnette permettant de fixer la douille 5 contre le corps 2 du bouchon, comme représenté sur la figure 1.

Sur la figure 3, on voit le noyau expanseur 6 réalisé sous forme tubulaire qui comporte une partie à grand diamètre extérieur 6a, une partie à petit diamètre extérieur 6b et une partie tronconique de raccordement entre les parties 6a et 6b.

La partie 6b à faible diamètre du noyau expanseur comporte un taraudage intérieur 16.

Le montage du bouchon 1 peut être réalisé de la manière suivante.

Dans un premier temps, le noyau expanseur 6 est introduit dans l'alésage de la douille 5 par sa partie d'entrée à faible diamètre. L'introduction du moyen expanseur 6 est rendue possible par l'élasticité des lamelles 9. Le moyen expanseur 6 est poussé dans la direction axiale de la douille 5 jusqu'au moment où son extrémité vient en butée sur le fond annulaire 7 de la douille.

Le noyau est alors dans sa position représentée sur la figure 1, à l'intérieur de la douille 5. Les parties 6a, 6b et 6c du noyau 6 sont alors disposées à l'intérieur des parties 5a, 5b et 5c de la douille 5, respectivement.

La douille 5 est alors introduite à l'intérieur du corps 2 du bouchon de manière à réaliser l'accrochage, par la liaison à baïonnette 12a, 12b, 14, du fond annulaire 7 sous le fond 3 du corps 2.

Le bouchon, dans sa configuration représentée sur la figure 1, peut alors être utilisé pour réaliser le bouchage d'un tube de générateur de vapeur.

La surface tronconique 6c du noyau 6 évasée vers le haut et constituant la surface d'actionnement de ce noyau se trouve au-dessus, c'est-à-dire du côté du fond 3, par rapport à la surface d'actionnement correspondante 5c de la douille 5.

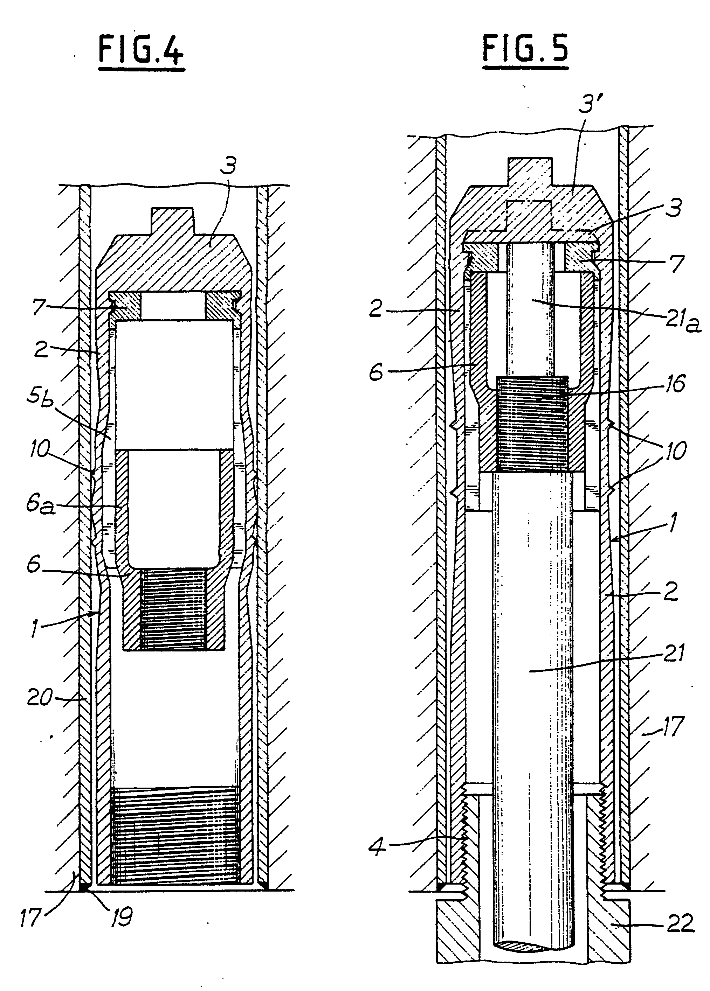

Sur la figure 4, on a représenté la partie d'extrémité d'un tube 20 d'un générateur de vapeur sertie à l'intérieur d'une plaque tubulaire 17 et fixée de manière étanche à cette plaque par un joint de soudure annulaire 19.

Pour réaliser la mise en place et la fixation étanche du bouchon 1 à l'intérieur du tube 20, on utilise un outillage de type connu comportant un corps venant en appui sur l'extrémité ouverte 2a du bouchon et une tige dont l'extrémité filetée est vissée dans la partie taraudée 16 du noyau expanseur 6.

Le bouchon relié à l'outillage de pose est introduit à l'intérieur du tube 20 de manière que son extrémité ouverte 2a opposée au fond 3 affleure sur la face d'entrée de la plaque tubulaire 17, comme représenté sur la figure 4.

Le corps de l'outillage est relié à un support et la tige est manoeuvrée, par un dispositif mécanique ou hydraulique pour réaliser une traction vers le bas sur le noyau 6.

Les surfaces d'actionnement correspondantes 6c du noyau et 5c de la douille coopèrent pour réaliser l'expansion diamétrale de la douille 5 et du corps 2 dont les cannelures circulaires 10 mises en contact avec la paroi du tube s'aplatissent et pénètrent légèrement à l'intérieur du métal.

Le noyau 6 est déplacé vers le bas jusqu'au moment où il occupe la position représentée sur la figure 4. La partie 6a à grand diamètre du noyau 6 est alors à l'intérieur de la partie à forte épaisseur de paroi 5b de la douille 5 qui a subi une expansion radiale par déformation des lamelles 9.

Le corps 2 du bouchon est alors fixé de manière résistante et étanche à l'intérieur du tube 20, les cannelures 10 étant ancrées dans la paroi intérieure du tube.

Il est alors possible de démonter l'outillage, en dévissant la partie filetée de cet outillage engagée dans la partie taraudée 16 du noyau expanseur.

L'outillage de pose peut être actionné manuellement par un opérateur ayant pénétré dans la boîte à eau du générateur de vapeur située sous la plaque tubulaire 17 ou mis en place et actionné par un dispositif automatique introduit dans la boîte à eau du générateur de vapeur et commandé depuis l'extérieur de la boîte à eau.

Sur la figure 5, on a représenté un bouchon 1 suivant l'invention, pendant son démontage.

On utilise pour ce démontage un outillage qui peut être constitué par l'outillage servant à la pose du bouchon et qui a été décrit plus haut. Il suffit pour cela que la tige de l'outillage puisse être actionnée dans les deux sens, de manière à exercer, pour le démontage, une poussée sur le noyau expanseur 6.

Comme il est visible sur la figure 5, l'extrémité de la tige de poussée 21 est fixée par vissage dans le taraudage 16 du noyau 6. Le corps de l'outillage 22 est vissé dans une partie taraudée 4 du corps 2 du bouchon. On exerce une poussée sur le noyau 6, en direction du fond 3 du bouchon, par l'intermédiaire de la tige 21. La tige 21 comporte un prolongement 21a à diamètre réduit au-delà de sa partie filetée qui vient en appui sur le fond du bouchon 3, lorsque le noyau 6 passe de sa position représentée sur la figure 4 à une position en retrait vers le fond annulaire 7 de la douille 5. On exerce ainsi une poussée sur le fond du bouchon dont l'extrémité ouverte 2a est reliée au corps de l'outillage par l'intermédiaire de la partie taraudée 4.

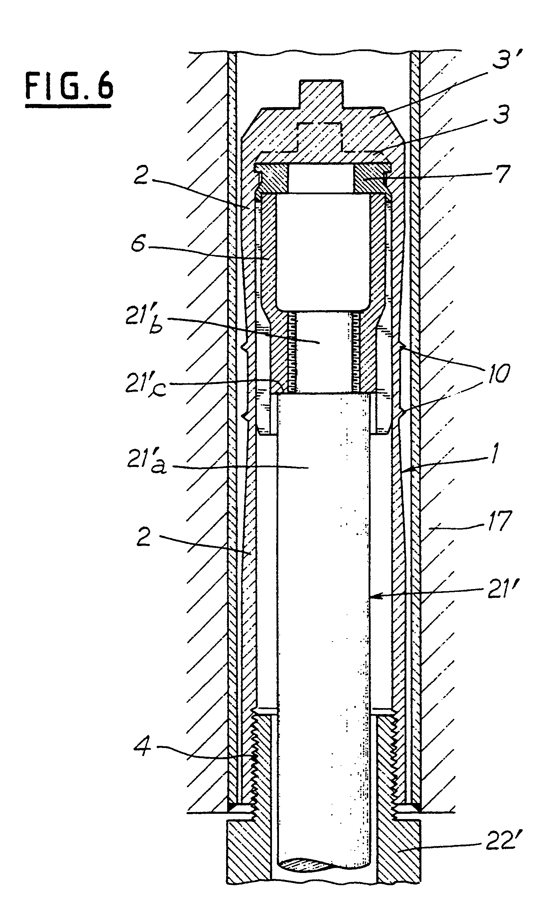

Sur la figure 6, on a représenté une variante de réalisation de l'outil comportant un corps 22′ analogue au corps 22 de l'outil représenté sur la figure 5 et une tige 21′ comportant une partie à grand diamètre 21′a et une partie à petit diamètre 21′b séparées par un épaulement 21′c. La tige 21′ ne comporte pas de partie filetée et vient s'engager par sa partie 21′b dans l'alésage du noyau 6. L'épaulement 21′c est alors en appui sur l'extrémité du noyau 6. On peut ainsi exercer une poussée sur le fond du bouchon 3 par l'intermédiaire du noyau 6 grâce à la tige 21′ de l'outil.

Le corps 2 du bouchon subit donc une extension dans la direction axiale, le fond du bouchon passant de sa position 3 à sa position 3′. Cette extension axiale d'une amplitude de quelques millimètres permet de réduire le diamètre de la partie déformée du corps 2 du bouchon par striction, de manière que les cannelures circulaires 10 soient extraites de la paroi du tube 20. Le corps du bouchon 2 qui n'est plus ancré dans la paroi du tube 20 peut alors être extrait du tube, sans que le tube soit rayé ou détérioré d'une autre façon, lors de l'extraction.

Dans le cas d'un bouchage préventif du tube, le tube du générateur de vapeur peut donc être réutilisé, après démontage du bouchon.

En outre, le démontage a été effectué en une seule opération sans qu'il ait été nécessaire d'extraire préalablement le noyau d'expansion.

Le montage en atelier du bouchon consistant à introduire le noyau d'expansion dans la douille fendue, puis à introduire et à fixer la douille à l'intérieur du corps du bouchon peut être réalisé très facilement et très rapidement, en particulier grâce à la souplesse et à l'élasticité de la douille fendue 5.

On utilise un outillage maintenant la douille 5 en appui sur le fond 3 par poussée sur l'extrémité 9a des lamelles ; le noyau 6 est alors tiré vers le bas de quelques millimètres de façon à amorcer la déformation, permettant ainsi le vissage de l'outillage dans le taraudage 16 sans risque de rotation du noyau 6.

Après montage, le noyau expanseur est retenu à l'intérieur de la douille par les surfaces d'actionnement 6c et 5c en contact. La douille 5 étant elle-même fixée sur le fond du bouchon, ce bouchon constitue un ensemble dont les éléments sont inséparables.

Grâce à la présence de lamelles déformables constituant la douille, on peut concevoir un bouchon subissant, lors de la pose, une expansion diamétrale importante. Le bouchon est ainsi susceptible d'être utilisé pour réaliser l'obturation de tubes dont les diamètres intérieurs peuvent varier dans une plage relativement large.

En outre, au moment de la pose, la présence des lamelles flexibles permet de limiter les forces de traction à mettre en oeuvre pour réaliser l'expansion diamétrale. La douille fendue joue le rôle de compensateur et de répartiteur de charges, pendant l'expansion diamétrale du bouchon.

La diminution des forces à mettre en oeuvre pour la pose du bouchon permet de limiter et même de supprimer tout risque de rupture de l'enveloppe du corps du bouchon pendant le montage.

Le démontage est d'autre part plus rapide puisqu'il peut être réalisé en une seule opération. Le démontage peut être effectué, même dans le cas d'un grippage du noyau expanseur dans la douille, la déformation se poursuivant alors par flexion de lamelles constituant la douille.

Dans le cas d'une rupture de la partie supérieure du bouchon, pendant le démontage, cette partie supérieure reste imperdable puisqu'elle reste fixée à l'extrémité de la douille fendue qui est elle-même engagée sur le noyau expanseur fixé à la tige de poussée.

Dans le cas d'un grippage du noyau expanseur à l'intérieur de la douille fendue, les lamelles de la douille sont susceptibles de se plier, ce qui permet d'exercer une poussée sur le noyau expanseur pour le mettre en appui contre le fond de la douille et du bouchon. En cas de rupture de l'enveloppe du corps de bouchon, le bouchon peut encore être retiré sans difficulté, les cannelures d'ancrage de ce corps de bouchon ayant été préalablement dégagées.

Le bouchon suivant l'invention est fixé de manière très efficace à l'intérieur du tube, ce qui permet de l'utiliser aussi bien pour le bouchage préventif d'un tube en atelier que pour le bouchage d'un tube lors d'une opération d'entretien du générateur de vapeur.

C'est ainsi qu'il est possible d'utiliser, pour fixer la douille à l'intérieur du corps du bouchon, un dispositif différent d'un dispositif à baïonnette. On peut par exemple réaliser cette fixation par clipsage, par un martelage extérieur du corps du bouchon, par une liaison vissée, par frettage, par soudage par bombardement électronique ou par déformation de la douille dans une gorge au fond du bouchon.

La douille peut comporter un nombre de secteurs cylindriques quelconques, ces secteurs cylindriques pouvant être nombreux et constituer de simples lamelles.

Dans un mode de réalisation préférentiel, le corps de bouchon est en un alliage de nickel tel que l'Inconel 690, la douille est en nickel 201 et le noyau expanseur en acier inoxydable 316 écroui. Ces matériaux résistent à la corrosion par le fluide primaire du réacteur et présentent les caractéristiques mécaniques requises. Cependant, il est possible d'utiliser d'autres matériaux dont les caractéristiques mécaniques et la tenue à la corrosion seraient équivalentes ou comparables.

Pour réaliser la pose et le démontage du bouchon suivant l'invention, on peut utiliser tout dispositif approprié et en particulier le dispositif décrit dans le FR-A-2621998.

Enfin, le bouchon d'obturation suivant l'invention peut être utilisé pour réaliser le bouchage de tout tube de générateur de vapeur ou d'échangeur thermique de structure équivalente quel que soit le diamètre des tubes. Le bouchon suivant l'invention peut être utilisé dans un autre domaine que l'industrie nucléaire.

## Revendications

1. Bouchon d'obturation d'un tube (20) de générateur de vapeur comportant un corps tubulaire (2) fermé à l'une de ses extrémités par un fond (3) et des moyens d'expansion diamétrale (5, 6) du bouchon constitués par une douille (5) placée à l'intérieur du corps (2) du bouchon dans une zone d'expansion et un noyau expanseur (6) comportant une surface d'actionnement (6c) destinée à coopérer avec une surface correspondante (5c) de la douille (5) pour réaliser son expansion diamétrale et l'expansion du bouchon, caractérisé par le fait que la douille (5) comporte au moins deux secteurs cylindriques élastiques (9) séparés par au moins deux fentes longitudinales (8) et une surface d'actionnement (5c) sur sa paroi interne évasée en direction du fond (3) du bouchon, le noyau expanseur (6) engagé à l'intérieur de la douille fendue (5) ayant une surface d'actionnement (6c) correspondante sur sa surface externe, disposée du côté du fond (3) du bouchon par rapport à la surface d'actionnement (5c) de la douille (5), lorsque le bouchon (1) est dans son état non expansé permettant son introduction dans le tube (20), l'expansion du bouchon pouvant être réalisée par déplacement du noyau expanseur (6) en direction de l'extrémité ouverte du corps (2) du bouchon opposée à son fond (3) à l'intérieur de la douille (5).

2. Bouchon d'obturation suivant la revendication 1, caractérisé par le fait que la douille (5) comporte un fond annulaire (7) destiné à venir en contact avec le fond (3) du corps (2) du bouchon (1) et à partir de ce fond annulaire (7), une première partie de faible épaisseur (5a) et une seconde partie à forte épaisseur (5b), séparées dans l'alésage intérieur de la douille (5), par une surface tronconique (5c) constituant la surface d'actionnement de la douille.

3. Bouchon d'obturation suivant la revendication 2, caractérisé par le fait que le fond annulaire (7) de la douille comporte des moyens (12a, 12b, 13) de fixation de la douille dans le corps (2) du bouchon (1) complémentaires de moyens (14) disposés à l'intérieur du corps (2) du bouchon, au voisinage de son fond (3).

4. Bouchon d'obturation suivant la revendication 3, caractérisé par le fait que la fixation de la douille (5) dans le corps de bouchon (2) est réalisée par une liaison à baïonnette, les moyens de liaison de la douille étant constitués par une gorge (13) et des lumières (12a, 12b) débouchant dans la gorge (13) et les moyens de fixation correspondants du corps de bouchon (2), par des ergots (14) en saillie radiale vers l'intérieur de l'alésage du corps (2), au voisinage du fond (3).

5. Bouchon d'obturation suivant l'une quelconque des revendications 1 à 4, caractérisé par le fait que le corps de bouchon (2) comporte à son extrémité ouverte opposée à son fond (3) une partie taraudée (4) et que le noyau expanseur (6) comporte également une partie taraudée (16), ces parties taraudées (4, 16) permettant de relier le bouchon à un outil de traction et de poussée du noyau expanseur (6) en direction de l'extrémité ouverte du corps (2) et en direction du fond (3) du corps (2), respectivement.

6. Bouchon d'obturation suivant l'une quelconque des revendications 1 à 5, caractérisé par le fait que le noyau expanseur (6) est constitué par un corps tubulaire ayant une partie (6a) à grand diamètre extérieure, une partie (6b) à petit diamètre extérieur et une surface externe (6c) de forme tronconique entre les parties (6a) et (6b).

7. Bouchon d'obturation suivant l'une quelconque des revendications 1 à 6, caractérisé par le fait que le corps (2) du bouchon et la douille (5) sont en alliage de nickel et le noyau expanseur (6) en acier inoxydable.

**Patentansprüche**

1. Stopfen zum Verschließen eines Rohres (20) eines Dampferzeugers mit einem rohrförmigen Körper (2), der an einem seiner Enden durch einen Boden (3) geschlossen ist, und mit diametralen Ausdehungseinrichtungen (5, 6) des Stopfens, gebildet aus einer Hülse (5), die im Inneren des Körpers (2) des Stopfens angeordnet ist, in einer Ausdehnungszone und einem Expansionskern (6), der eine Betätigungsoberfläche (6c) aufweist, die dazu bestimmt ist, mit einer entsprechenden Oberfläche (5c) der Hülse (5) zusammenzuwirken, um deren diametrale Ausdehnung und die Ausdehnung des Stopfens herzustellen, **dadurch gekennzeichnet, daß die Hülse (5)** wenigstens zwei zylindrische elastische Sektoren (9) aufweist, die durch wenigstens zwei Längsspalten (8) getrennt sind und eine Betätigungsoberfläche (5c) auf der Innenwand aufweist, die in Richtung des Bodens (3) des Stopfens erweitert ist, wobei der Expansionskern (6), der im Inneren der geschlitzten Hülse (5) eingreift, eine entsprechende Betätigungsoberfläche (6c) auf seiner äußeren Oberfläche aufweist, die auf der Seite des Bodens (3) des Stopfens bezüglich der Betätigungsoberfläche (5c) der Hülse (5) angeordnet ist, wenn der Stopfen (1) in seinem nichtexpandierten Zustand sich befindet, was seine Einführung in das Rohr (20) erlaubt, wobei die Ausdehnung des Stopfens durch Bewegung des Expansionskerns (6) in Richtung der offenen Endes des Körpers (2) des Stopfens entgegengesetzt seinem Boden (3) im Inneren der Hülse (5) erzeugt werden kann.

2. Verschlußstopfen nach Anspruch 1, **dadurch gekennzeichnet, daß die Hülse (5) einen ringförmigen Boden (7) aufweist, der dazu bestimmt ist, mit dem Boden (3) des Körpers (2) des Stopfens (1) in Berührung zu kommen und ausgehend von diesem ringförmigen Boden (7) einen ersten Bereich von geringer Dicke (5a) und einen zweiten Bereich von großer Dicke (5b) aufweist, die in der inneren Ausnehnung der Hülse (5) getrennt sind, durch eine kegelstumpfförmige Oberfläche (5c), die die Betätigungsoberfläche der Hülse bildet.

3. Verschlußstopfen nach Anspruch 2, **dadurch gekennzeichnet, daß der ringförmige Boden (7) der Hülse Befestigungseinrichtungen (12a, 12b, 13) der Hülse in dem Körper (2) des Stopfens (1) aufweist, die komplementär zur Einrichtung (14) sind, die im Inneren des Körpers (2) des Stopfens in der Nähe seines Bodens (3) angeordnet sind.

4. Verschlußstopfen nach Anspruch 3, **dadurch gekennzeichnet, daß die Befestigung der Hülse (5) in dem Stopfenkörper (2) durch eine Bajonettverbindung erzeugt wird, wobei die Verbindungseinrichtungen der Hülse gebildet werden aus einem Hals (13) und Ausnehmungen (12a, 12b), die in den Hals (13) münden und die entsprechenden Befestigungseinrichtungen des Körpers des Stopfens (2) durch Zapfen (14) gebildet werden, die radial in das Innere der Ausnehmung des Körpers (2) in der Nähe des Bodens (3) vorspringen.

5. Verschlußstopfen nach einem der Ansprüche 1 bis 4, **dadurch gekennzeichnet**, daß der Stopfenkörper (2) an seinem offenen Ende entgegengesetzt seinem Boden (3) einen Gewindebereich (4) aufweist, und daß der Expansionskern (6) ebenfalls einen Gewindebereich (16) aufweist, wobei diese Gewindebereiche (4, 16) erlauben, den Stopfen mit einem Anzugs- und Druckwerkzeug des Expansionskerns (6) in Richtung des offenen Endes der Körpers (2) bzw. in Richtung des Bodens (3) des Körpers (2) zu verbinden.

6. Verschlußstopfen nach einem der Ansprüche 1 bis 5, **dadurch gekennzeichnet**, daß der Expansionskern (6) gebildet wird aus einem rohrförmigen Körper, der einen Bereich (6a) von großem Außendurchmesser, einen Bereich (6b) von kleinem Außendurchmesser und eine äußere Oberfläche (6c) von Kegelstumpfform zwischen den Bereichen (6a) und (6b) aufweist.

7. Verschlußstopfen nach einem der Ansprüche 1 bis 6, **dadurch gekennzeichnet**, daß der Körper (2) des Stopfens und die Hülse (5) aus einer Nickellegierung gebildet sind und der Expansionskern (6) aus einem nichtrostenden Stahl gebildet ist.

## Claims

1. Sealing plug of a steam-generator tube (20) comprising a tubular body (2), closed at one of its ends by means of a base (3), and means for diametric expansion (5, 6) of the plug, which consist of a bush (5) place inside the body (2) of the plug in an expansion zone and of an expander core (6) having an actuating surface (6c) adapted to interact with a corresponding surface (5c) of the bush (5) in order to achieve its diametric expansion and the expansion of the plug, characterised in that the bush (5) comprises at least two resilient cylindrical sectors (9), separated by at least two longitudinal slots (8), and, on its inner wall, an actuating surface (5c) widening towards the base (3) of the plug, the expander core (6) engaging in the slotted bush (5) having, on its outer surface, a corresponding actuating surface (6c) located on the same side as the base (3) of the plug in relation to the actuating surface (5c) of the bush (5), when the plug (1) is in its non-expanded state allowing it to be inserted in the tube (20), the expansion of the plug being effected by shifting the expander core (6), inside the bush (5), towards the open end of the body (2) of the pug opposite its base (3).

2. Sealing plug according to Claim 1, characterised in that the bush (5) has an annular base (7), adapted to make contact with the base (3) of the body (2) of the plug (1) and, starting from this annular base (7), a thin first portion (5a) and a thick second portion (5b) which are separated, in the inner bore of the bush (5), by a frustoconical surface (5c) forming the actuating surface of the bush.

3. Sealing plug according to Claim 2, characterised in that the annular base (7) of the bush has means (12a, 12b, 13) for fixing the bush in the body (2) of the plug (1), which are complementary to means (14) arranged inside the body (2) of the plug, near its base (3).

4. Sealing plug according to Claim 3, characterised in that the bush (5) is secured in the plug body (2) by a bayonet fastening, the connecting means of the bush consisting of a groove (13) and notches (12a, 12b) opening into the groove (13), and the corresponding fastening means of the plug body (2) consisting of lugs (14) projecting radially towards the inside of the bore of the body (2), near the base (3).

5. Sealing plug according to any of Claims 1 to 4, characterised in that the plug body (2) has an internally threaded part (4) at its open end opposite its base (3), and in that the expander core (6) likewise has an internally threaded part (16), these internally threaded parts (4, 16) making it possible to connect the plug to a tool for pulling and pushing the expander core (6) towards the open end of the body (2) and towards the base (3) of the body (2) respectively.

6. Sealing plug according to any of Claims 1 to 5, characterised in that the expander core (6) consists of a tubular body having a part (6a) of large external diameter, a part (6b) of small external diameter and an outer surface (6c) of frustoconical shape between the parts (6a) and (6b).

7. Sealing plug according to any of Claims 1 to 6, characterised in that the plug body (2) and the bush (5) are made of a nickel alloy and the expander core (6) is made of stainless steel.

## FIG.1

## FIG.2

## FIG.3

# FIG.4

# FIG.5

## FIG.6